Europäisches Patentamt

(19) European Patent Office

Office européen des brevets

(11) Publication number: **0 001 710**

**B1**

# EUROPEAN PATENT SPECIFICATION

(45) Date of publication of patent specification: **12.05.82**

(21) Application number: **78300517.6**

(22) Date of filing: **18.10.78**

(51) Int. Cl.³: **C 04 B 35/50,**
**C 04 B 37/00, H 01 J 61/36**

(54) A heat resistant sealing composition, a method of making this composition, a method of making a ceramic-cermet seal in electric discharge devices and the device thus obtained.

(30) Priority: **20.10.77 GB 4376677**

(43) Date of publication of application:
**02.05.79 Bulletin 79/9**

(45) Publication of the grant of the patent:
**12.05.82 Bulletin 82/19**

(84) Designated Contracting States:
**DE FR NL**

(56) References cited:
**DE - B - 1 257 964**
**FR - A - 2 360 535**
**GB - A - 1 173 386**
**GB - A - 1 180 696**
**SU - A - 560 858**
**US - A - 3 993 844**

CHEMICAL ABSTRACTS, vol. 87, no. 12, Sept.
1977, col. 89404b. "Corrosion-resistant high-
temperature material with an oxygen-ionic
conductivity

(73) Proprietor: **THORN EMI PLC**
**Thorn House Upper Saint Martin's Lane**
**London, WC2H 9ED (GB)**

(72) Inventor: **Hing, Peter**
**Thorn House Upper Saint Martin's Lane**
**London WC2H 9ED (GB)**
Inventor: **Khan, Ehsan Ullah**
**Thorn House Upper Saint Martin's Lane**
**London WC2H 9ED (GB)**

(74) Representative: **Marsh, Robin Geoffrey**
**Thorn EMI Patents Limited The Quadrangle**
**Westmount Centre Uxbridge Road**
**Hayes Middlesex, UB4 0HB (GB)**

### A heat resistant sealing composition, a method of making this composition, a method of making a ceramic-cermet seal in electric discharge devices and the device thus obtained

The present invention relates to sealing materials suitable for making heat-resistant, and usually hermetic, seals between components of electrical discharge devices.

It has been known for a number of years, as revealed in US—A 3,588,573 and DE—A 2,307,191, that the current sealing material for high pressure sodium lamps based on a modified calcium magnesium aluminate composition with barium oxide and a small amount of boric oxide is chemically inadequate in the presence of reactive metal halide vapours at around 800°C. In US—A 3,588,573 a family of high temperature metal halide resistant sealing compounds using alumina and rare-earth oxides with high melting points ranging from 1720°C to 1800°C is disclosed. The use of such high temperatures for sealing the end of the arc tubes, particularly in the case of short tubes, presents considerable technical problems. For instance, it can easily cause volatilisation of the metal halide species in the final lamp processing.

DE—A 2,307,191 discloses the use of some sealing compounds in the $Al_2O_3$—$SiO_2$—MnO system, which are claimed to be metal halide resistant. The silica in the sealing compound is likely to interact with certain metal halides, such as scandium iodide, commonly used in conventional metal halide lamps with a silica envelope. The reaction between scandium iodide and silica is a well-known factor limiting the colour rendition and efficiency of these lamps. The disclosure by Matsushita in A.A. 47—34066 of an unspecified metal halide resistant sealing material of the $Al_2O_3$—$SiO_2$—$B_2O_3$—BeO type is also suspect because of the presence of silica. It is also likely to be objectionable in the lighting industry because of the presence of beryllia, which is a highly toxic material. FR—A 2360535 discloses a sealing material comprising at least two of the oxides $Al_2O_3$,$SiO_2$ and $B_2O_3$ together with at least one of the oxides $La_2O_3$ and $Y_2O_3$.

We now provide in accordance with this invention sealing compositions for use in electrical discharge devices comprising by weight from 60 to 95% of a rare earth oxide, from 5 to 40% of boric oxide, an amount of up to 5% of phosphorus pentoxide, and an amount of up to 5% of one or of each of aluminium oxide and magnesium oxide. Our sealing compositions are useful in the construction of seals in ceramic discharge lamps, more especially between sintered ceramic oxides such as alumina, and cermet materials such as those disclosed in our Application GB—A 1571084 for example alumina-tungsten and alumina-molybdenum cermets. Seals made with these compositions are, moreover, found to retain their hermetic properties and integrity without any sign of chemical attack after 100 hours at 900°C in reactive metal halide vapours such as mercuric chloride, mercury iodide, sodium chloride, tin chloride, scandium iodide, sodium iodide or cesium iodide.

Although the preferred rare earth oxide is lanthanum oxide, other rare earth oxides, such as Sm, Nd, Sc, Y, Yb, Dy or Ce oxides, or mixed rare earth oxides, can also be used.

Also in accordance with this invention it has further been found that hermetic seals between dense alumina components, cermet components or alumina and cermet components can be prepared by using the composition defined above in vacuum or inert atmospheres between 1100°C and 1650°C.

In particular, compositions around the eutectic compositions of the rare earth and boric oxides, for example at 89.68% by weight lanthanum oxide and 10.32% by weight of boric oxide, have been found to seal translucent alumina arc tubes to alumina-tungsten cermets at 1350°C. The sealing material at the join between the sintered alumina and cermet components consists mainly of the two major crystalline phases: in the case of lanthanum oxide $3La_2O_3.B_2O_3$ and $La_2O_3.B_2O_3$. These crystalline phases precipitated from the melt during cooling are quite coarse, typically several hundred microns in diameter.

The assembly of large crystalline phases, although not obviously detrimental to the construction of hermetic seals, lowers the strength of the seal and is liable to initiate cracks during thermal cycling. As stated above, we thus add a small amount (up to 5%) of phosphorus pentoxide, together with up to 5% of one or of each of aluminium oxide and magnesium oxide. This results in the formation of aluminium phosphate and/or magnesium phosphate and reduces the size of the precipitated phases by at least an order of magnitude, typically to the order of 3 to 5 microns in diameter. The morphology of the precipitated phases is also drastically altered from large octahedral crystalline phases to needle-like platelets. Although the exact mechanisms responsible for the microstructual changes are not well understood, the included additive such as phosphorus pentoxide, aluminium oxide and magnesium oxide, preferably up to a total of about 3% by weight, drastically increase the rate of crystal nucleation during solidification and subsequently increase the number of crystalline phase per unit volume. Thus a preferred composition is about 88% by weight lanthanum oxide, 10.50% by weight boric oxide, 0.5% by weight aluminium oxide, 0.5% by weight magnesium oxide and 0.5% by weight phosphorus pentoxide.

A preferred method of preparing the sealing compound of this invention consists of mixing the appropriate amount of rare earth oxide, obtained through a soluble salt such as the nitrate, sulphate or oxalate, with boric oxide. The additives can also be added as oxides or through a soluble salt or their respective phosphates. The mixture is then fused at 200°C for 2 hours to homogenize the materials, calcined at up to 1200°C for 7 hours, in air or inert atmosphere, crushed and sieved through a 250 micron aperture mesh. The fusion temperature and fusing time are not particularly critical as this technique simply helps to homogenize all the constituents. However, a preferred calcining temperature in air or inert atmosphere is 900°C for the production of fine mixed oxide powders with good flow, pressing and ejection characteristics, thus permitting the formation of elements such as discs, thin rings or washers. The fusion and calcination must be carried out in high purity alumina or platinum crucibles to avoid picking up undesirable impurities which could adversely affect the sealing behaviour.

The frit can be applied in the form of a slurry, using an organic liquid such as methyl or ethyl alcohol; the frit slurry or a preformed ring or disc can then be prefixed or premelted on the ceramic or cermet component prior to the final sealing operation. Premelted frit on the ceramic components offers additional advantages as it removes trapped air, moisture and other residual volatile species which could interfere with the final ceramic lamp processing.

The lanthanum oxide compositions set forth in the Table possess excellent wettability. They represent preferred percentage ranges of the individual constituents, but not the limits of useful compositions.

TABLE 1

| $La_2O_3$ % by wt | $B_2O_3$ % by wt | $P_2O_5$ % by wt | $Al_2O_3$ % by wt | MgO % by wt |
|---|---|---|---|---|
| 80 | 15 | 1.5 | 1.5 | 2 |
| 85 | 12 | 1.0 | 1.0 | 1.0 |
| 87 | 10 | 1.0 | 1.0 | 1.0 |
| 89 | 9.5 | 0.5 | 0.5 | 0.5 |
| 93 | 6.0 | 0.4 | 0.4 | 0.2 |

Sealing the components between 1325°C and 1500°C with a tantalum heating element or by radio frequency heating permits the formation of a good fillet between the alumina components and the cermet components or between the alumina to cermet components without producing unnecessary flow of the sealing materials, for instance, along the length of the alumina arc tube. The alumina arc tube may be a sintered alumina or artificial sapphire tube.

The heating rate should preferably not exceed 700°C per minute to avoid entrapment of air in the melted sealing materials. A suitable heating rate is 400°C per minute as this minimises the formation of air bubbles. Holding the temperature for 2 minutes, moreover, helps the sealing materials to wet the alumina arc tube and the cermet components. The sealing materials are suitable for joining components irrespective of whether the surfaces are machined, polished or in the as-sintered condition.

Another important factor in the construction of a hermetic seal between alumina and cermet materials is the rate of cooling of the melt, a preferred cooling rate being 40°C per minute for 5 minutes after melting and holding the melt for 2 minutes, followed by a cooling rate not exceeding 80°C per minute for another 15 minutes. The cooling rate allows the additives to act synergetically in the production of small interlocking crystalline phases, which confers improved strength on the seal, thus enabling it to withstand thermal cycling as is necessary for lamp operation.

It has further been found that by increasing the amount of boric oxide in the $La_2O_3.B_2O_3$ system beyond near eutectic proportions, hermetic seals can be effected at temperatures as low as 1100°C. The upper limit of sealing temperatures is as high as 1600°C. Table II below shows the compositions and the minimum temperatures at which hermetic seals have been obtained between alumina envelopes and cermet caps.

TABLE II

| La$_2$O$_3$ % by weight | B$_2$O$_3$ % by weight | Minimum temperature for hermetic seals |
|---|---|---|
| 75.65 | 24.35 | 1100 °C |
| 78.38 | 21.66 | 1150 °C |
| 80.28 | 19.62 | 1175 °C |
| 82.31 | 17.69 | 1200 °C |
| 84.44 | 15.56 | 1275 °C |

Apart from the addition of small amounts of phosphorus pentoxide, alumina and magnesia, other rare-earth oxides, for example those of yttrium, ytterbium, samarium, dysprosium and cerium, can be additionally incorporated in the La$_2$O$_3$.B$_2$O$_3$ system to enhance the properties of the seals. The total amount of these minor oxides should preferably not exceed 5% by weight. It is desirable, but not essential, to include these minor additions to effect hermetic seals. Examples of compositions with such additions which have been successfully used for obtaining hermetic seals are shown in the following Table III.

TABLE III

| La$_2$O$_3$ % by weight | B$_2$O$_3$ % by weight | Dy$_2$O$_3$ % by weight | Ce$_2$O$_3$ % by weight | MgO % by weight | Al$_2$O$_3$ % by weight | P$_2$O$_5$ % by weight |
|---|---|---|---|---|---|---|
| 70.25 | 24.75 | 1.50 | 1.5 | 1.5 | 0.50 | 0.50 |
| 77.02 | 19.50 | 2.00 | — | — | 0.52 | 0.50 |
| 79.14 | 17.15 | 1.00 | 1.00 | 1.00 | — | 0.75 |
| 81.40 | 15.60 | — | — | — | 1.00 | 1.00 |

The most successful compositions of this kind fall in the range of proportions by weight: 60 to 95% lanthanum oxide, 5 to 40% boric oxide, 0 to 5% phosphorus pentoxide, 0 to 5% aluminium oxide, 0 to 5% magnesium oxide, 0 to 5% other rare earth oxide, such as dysprosium oxide, cerium oxide, ytterbium oxide or samarium oxide.

As already mentioned, sealing compositions can be based on rare earth oxides other than lanthanum oxide, such as samarium oxide and neodymium oxide. These sealing compounds in, for example, the Sm$_2$O$_3$.B$_2$O$_3$ and Nd$_2$O$_3$.B$_2$O$_3$ systems are similar to those in the La$_2$O$_3$.B$_2$O$_3$ system. Table IV below shows some useful sealing compositions of this kind.

4

TABLE IV

| $Nd_2O_3$ | $Sm_2O_3$ | $B_2O_3$ | Range of sealing temperature °C |
|---|---|---|---|
| 72.35 | — | 27.75 | 1350—1600 |
| 67.45 | — | 32.55 | 1200—1600 |
| 61.34 | — | 38.66 | 1200—1600 |
| — | 70.96 | 29.04 | 1450—1600 |
| — | 72.95 | 27.05 | 1350—1600 |
| — | 68.23 | 31.77 | 1200—1600 |
| — | 64.37 | 35.63 | 1200—1600 |

Seals described herein as hermetic will usually be impervious to helium. Such seals are achieved by the preferred compositions and methods here described but it will be appreciated that such a degree of hermeticity may not always be required

In the accompanying drawings:

Fig. 1 is a diagram illustrating a typical sealing sequence;

Fig. 2 shows one example of a lamp seal constructed with the help of the materials of this invention; and

Fig. 3 shows a further example of a constructed seal.

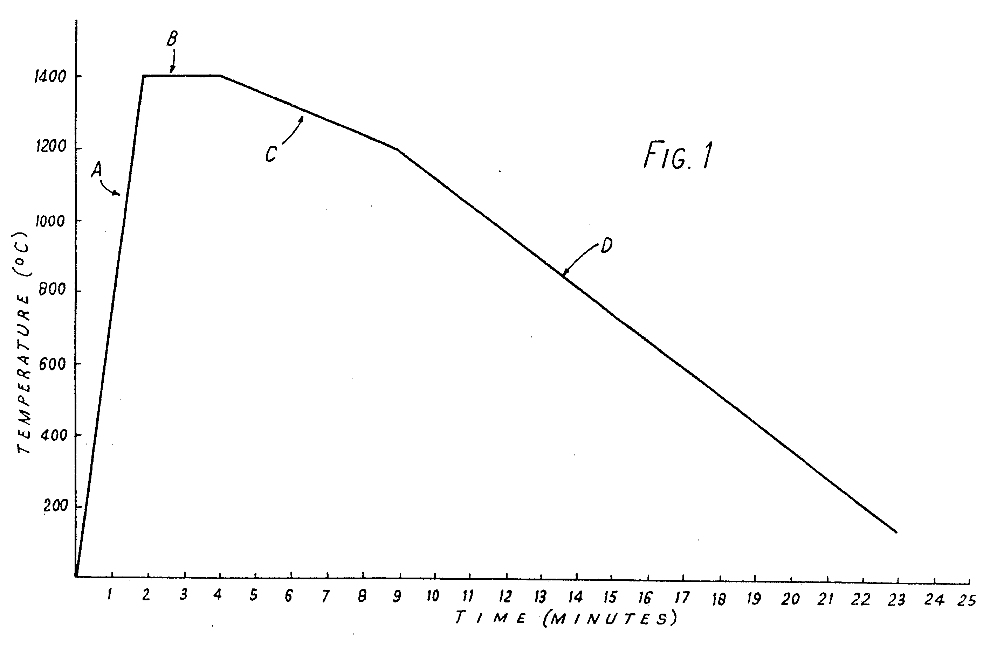

In Fig. 1, in which temperature is plotted against time, one example is given of a heating and cooling sequence suitable for sealing an alumina component to a cermet component. After initial heating to 1400°C in the region A, the seal is held at this temperature (region B) and subsequently allowed to cool slowly. The first stage of cooling C is more gradual than the second stage D.

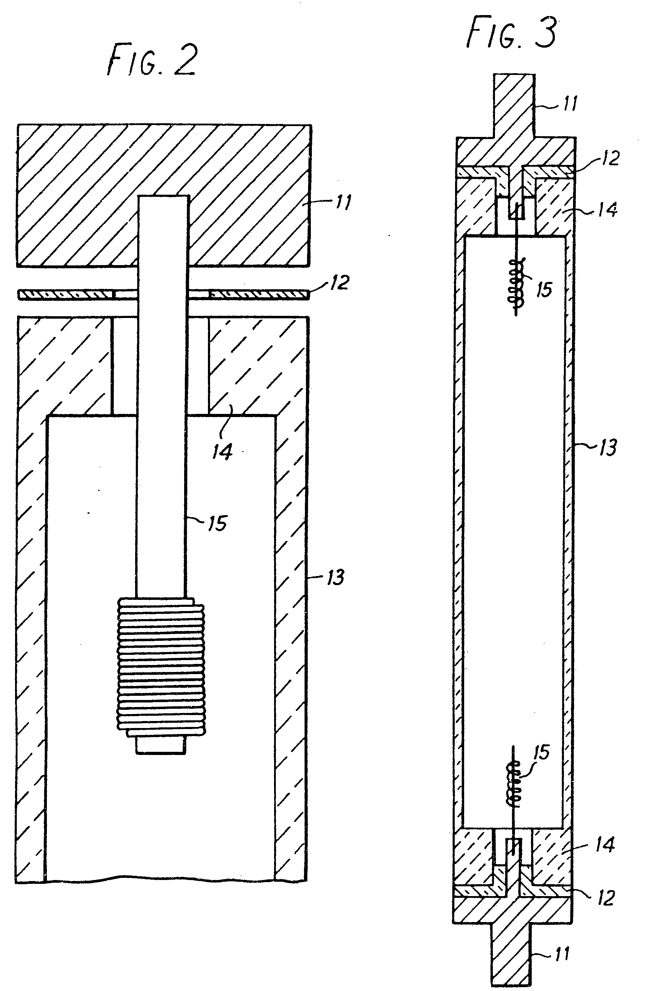

Constructed seals are shown by way of example only in Figs 2 and 3. These seals have withstood metal halide vapours such as mercuric chloride, mercuric iodide, sodium chloride, tin chloride, scandium iodide, sodium iodide or cesium iodide at 900°C for at least 100 hours without any visible sign of chemical reaction. the seals remain hermetic after exposure to these active metal halides used in a variety of metal halide lamps. In the lamp of Fig. 2, a cermet cap 11 carrying the electrode 15 is placed on a frit ring 12 composed of the sealing material of this invention at the end of an alumina arc tube 13 with a monolithic alumina plug 14. Fig. 3 shows a completely sealed unit ready for incorporation into a ceramic discharge lamp. The reference numerals have the same significance as in Fig. 2.

The sealing materials of this invention can be used in a variety of ways for the construction of ceramic discharge lamps containing sodium and/or metal halide vapours in alumina arc tubes. For instance, they can be used for sealing hermetically alumina and niobium components in the construction of high pressure sodium lamps. Another application of the sealing materials described includes the formation of protective metal halide coatings on cermet materials and on a range of refractory metals such as niobium, tungsten, molybdenum, tantalum for the construction of ceramic metal halide discharge lamps containing sodium vapours and/or metal halide vapours.

The sealing materials of this invention can be used to join sintered alumina or artificial single crystal sapphire components, cermet components or alumina to cermet components of any convenient geometry for the construction of ceramic discharge lamps. Such lamps may show improved performance as regards efficiency, colour rendition and higher resistance to metal halide attack at elevated temperature than conventional metal halide lamps using silica envelopes.

Claims

1. A sealing composition for use in electrical discharge devices comprising by weight from 60 to 95% of a rare earth oxide, from 5 to 40% of boric oxide, an amount of up to 5% of phosphorus pentoxide, and an amount of up to 5% of one or of each of aluminium oxide and magnesium oxide.

2. A sealing composition according to claim 1 wherein the rare earth oxide comprises lanthanum oxide.

3. A sealing composition according to claim 1 or claim 2 comprising by weight from 60 to 95% of lanthanum oxide, from 5 to 40% of boric oxide and from 0 to 5% of the oxide of a rare earth other than lanthanum.

4. A sealing composition according to any one of claims 1 to 3 which comprises at least some of both aluminium oxide and magnesium oxide.

5. A sealing composition according to any one of claims 1 to 4 wherein the total amount of phosphorus pentoxide, aluminium oxide and/or magnesium oxide is up to 3% by weight.

6. A sealing composition according to any one of claims 1 to 5 wherein the rare earth oxide and boric oxide are present in substantially eutectic proportions.

7. A sealing composition according to claim 6 comprising by weight about 88% lanthanum oxide, 10.5% boric oxide, 0.5% aluminium oxide, 0.5% magnesium oxide and 0.5% phosphorus pentoxide.

8. A method of making a sealing compositions according to any one of claims 1 to 7 which comprises mixing together the appropriate quantities of the individual oxides or their salts, or in the case of phosphorus pentoxide a phosphate of one of the metals to be included, calcining the mixture and crushing the calcined material to a powder.

9. A method according to claim 8 wherein the mixture is fused to homogenize the materials before being calcined.

10. A method according to claim 9 wherein fusion is carried out at about 200°C and calcination at a temperature up to 1200°C.

11. A method according to any of claims 8 to 10 wherein the crushed material is made into a slurry with an organic liquid.

12. A method according to any of claims 8 to 10 wherein the crushed material is formed into a pressed element.

13. A method of making a seal in electric discharge devices, especially between ceramic and cermet components, which comprises applying a composition according to any of claims 1 to 7 to at least one of the surfaces to be joined, and bringing the surfaces into contact and heating them in a vacuum or inert atmosphere at 1100 to 1650°C.

14. An electric lamp or other discharge device incorporating a seal made by a method according to claim 13.

**Revendications**

1. Composition de scellement pour utilisation dans les dispositifs à décharge électrique, comportant en poids de 60 à 95% d'un oxyde de terre rare, de 5 à 40% d'oxyde borique, une quantité pouvant atteindre 5% de pentoxyde de phosphore, et une quantité pouvant atteindre 5% de l'un ou de chacun des oxydes d'aluminium et de magnésium.

2. Composition de scellement selon la revendication 1, dans laquelle l'oxyde de terre rare est de l'oxyde de lanthane.

3. Composition de scellement selon la revendication 1 ou 2, comportant en poids de 60 à 95% d'oxyde de lanthane, de 5 à 40% d'oxyde borique et de 0 à 5% de l'oxyde d'une terre rare autre que le lanthane.

4. Composition de scellement selon l'une des revendications 1 à 3, comportant au moins une certaine quantité à la fois d'oxyde d'aluminium et d'oxyde de magnésium.

5. Composition de scellement selon l'une des revendications 1 à 4, dans laquelle la quantité totale de pentoxyde de phosphore, d'oxyde d'aluminium et/ou d'oxyde de magnésium peut atteindre 3% en poids.

6. Composition de scellement selon l'une des revendications 1 à 5, dans laquelle l'oxyde de terre rare et l'oxyde borique sont présents en proportions sensiblement eutectiques.

7. Composition de scellement selon la revendication 6, comportant en poids environ 88% d'oxyde de lanthane, 10, 5% d'oxyde borique, 0, 5% d'oxyde d'aluminium, 0, 5% d'oxyde de magnésium et 0, 5% de pentoxyde de phosphore.

8. Procédé de préparation de compositions de scellement selon l'une des revendications 1 à 7, consistant à mélanger ensemble les quantités appropriées des différents oxydes ou de leurs sels, ou dans le cas de pentoxyde de phosphore, un phosphate de l'un des métaux à inclure, à calciner le mélange, et à broyer sous forme de poudre le matériau calciné.

9. Procédé selon la revendication 8, selon lequel le mélange est fondu pour homogénéiser les matériaux avant de les calciner.

10. Procédé selon la revendication 9, selon lequel la fusion est effectuée à environ 200°C, et la calcination à une température pouvant atteindre 1200°C.

11. Procédé selon l'une des revendications 8 à 10, selon lequel le matériau broyé est transformé en une pâte à l'aide d'un liquide organique.

12. Procédé selon l'un des revendications 8 à 10, selon lequel le matériau broyé est transformé en un élément comprimé.

13. Procédé de réalisation d'un scellement dans des dispositifs à décharge électrique, notamment entre des composants céramique et cermet, consistant à appliquer une composition selon l'une des revendications 1 à 7 sur au moins une des surfaces à sceller, à amener les surfaces en contact et à les

# 0 001 710

chauffer dans le vide ou en atmosphère inerte, à 1100°C—1650°C.

14. Lampe électrique ou autre dispositif à décharge comportant un scellement réalisé selon un procédé conforme à la revendication 13.

**Patentansprüche**

1. Dichtungsmittel zur Verwendung bei elektrischen Entladungsvorrichtungen, dadurch gekennzeichnet, daß es einen Gewichtsanteil von 60 bis 95% eines Seltenerdoxids, 5 bis 40% Boroxid, bis zu 5% Phosphorpentoxid und bis zu 5% Aluminiumoxid und/oder Magnesiumoxid aufweist.

2. Dichtungsmittel nach Anspruch 1, dadurch gekennzeichnet, daß das Seltenerdoxid Lanthanoxid ist.

3. Dichtungsmittel nach Anspruch 1 oder 2, dadurch gekennzeichnet, daß es 60 bis 95 Gewichtsprozent Lanthanoxid, 5 bis 40 Gewichtsprozent Boroxid und 0 bis 5 Gewichtsprozent eines Oxids eines anderen Seltenerdmetalls als Lanthan enthält.

4. Dichtungsmittel nach einem der Ansprüche 1 bis 3, dadurch gekennzeichnet, daß es zumindest einen Gehalt von sowohl Aluminiumoxid als auch Magnesiumoxid aufweist.

5. Dichtungsmittel nach einem der Ansprüche 1 bis 4, dadurch gekennzeichnet, daß die Gesamtmenge von Phosphorpentoxid, Aluminiumoxid und/oder Magnesiumoxid bis zu 3 Gewichtsprozent beträgt.

6. Dichtungsmittel nach einem der Ansprüche 1 bis 5, dadurch gekennzeichnet, daß das Seltenerdoxid und das Boroxid in im wesentlichen eutektischen Zugabeverhältnissen enthalten sind.

7. Dichtungsmittel nach Anspruch 6, dadurch gekennzeichnet, daß es etwa 88 Gewichtsprozent Lanthanoxid, 10,5 Gewichtsprozent Boroxid, 0,5 Gewichtsprozent Aluminiumoxid, 0,5 Gewichtsprozent Magnesiumoxid und 0,5 Gewichtsprozent Phosphorpentoxid enthält.

8. Verfahren zur Herstellung von Dichtungsmitteln nach einem der Ansprüche 1 bis 7, dadurch gekennzeichnet, daß man die geeigneten Mengen der einzelnen Oxide oder ihrer Salze vermischt, oder, im Falle des Phosphorpentoxids, ein Phosphat eines der enthaltenden Metalle einsetzt, das Gemisch calciniert und das calcinierte Material zu einem Pulver zerkleinert.

9. Verfahren nach Anspruch 8, dadurch gekennzeichnet, daß das Gemisch zur Homogenisierung der Materialien vor der Calcinierungsstufe verschmolzen wird.

10. Verfahren nach Anspruch 9, dadurch gekennzeichnet, daß man die Verschmelzung bei etwa 200°C durchgeführt und daß man bei Temperaturen von bis zu 1200°C calciniert.

11. Verfahren nach einem der Ansprüche 8 bis 10, dadurch gekennzeichnet, daß aus dem zerkleinerten Material eine Aufschlämmung mit einer organischen Flüssigkeit hergestellt wird.

12. Verfahren nach einem der Ansprüche 8 bis 10, dadurch gekennzeichnet, daß man das zerkleinerte Material zu einem Preßteil formt.

13. Verfahren zur Herstellung einer Dichtung für elektrische Entladungsvorrichtungen, insbesondere zwischen Keramik und Cermet (Metallkeramik)-Komponenten, dadurch gekennzeichnet, daß man ein Mittel gemäß einem der Ansprüche 1 bis 7 auf mindestens eine der zu verbindenden Oberflächen aufbringt, und man die Oberflächen miteinander in Kontakt bringt und diese in Vakuum oder in Inertatmosphäre auf 1100 bis 1650°C erhitzt.

14. Eine elektrische Lampe oder eine andere Entladungtseinrichtung, gekennzeichnet durch einen Gehalt an einem Dichtungsmittel, das gemäß Anspruch 13 hergestellt worden ist.

FIG.1

FIG. 2

FIG. 3